Europäisches Patentamt

(19) European Patent Office

Office européen des brevets

(11) Publication number: **0 045 553**
**B1**

## (12) EUROPEAN PATENT SPECIFICATION

(45) Date of publication of patent specification: **06.03.85**

(21) Application number: **81200866.2**

(22) Date of filing: **30.07.81**

(51) Int. Cl.⁴: **B 65 G 61/00,** B 66 F 9/18

(54) **Apparatus for displacing part by part a stack of cages, cases or boxes.**

(30) Priority: **04.08.80 NL 8004438**

(43) Date of publication of application:
**10.02.82 Bulletin 82/06**

(45) Publication of the grant of the patent:
**06.03.85 Bulletin 85/10**

(84) Designated Contracting States:
**DE FR GB NL**

(56) References cited:
**DE-B-1 109 075**
**FR-A-2 319 554**
**US-A-2 709 015**
**US-A-3 029 962**

(73) Proprietor: **Stork Services B.V.**
**Industrieplein 1**
**NL-7553 LL Hengelo (NL)**

(72) Inventor: **Jacques, Johannes Henricus**
**No. 89 Auskamplanden**
**NL-7542AR Enschede (NL)**

(74) Representative: **Schumann, Bernard Herman**
**Johan et al**
**OCTROOIBUREAU ARNOLD & SIEDSMA**
**Sweelinckplein 1**
**NL-2517 GK The Hague (NL)**

Courier Press, Leamington Spa, England.

## Description

The invention relates to an apparatus for displacing in parts a stack of cages, cases or boxes arranged in said stack in a plurality of superjacent and adjacent rows, said apparatus comprising a displaceable framework having two vertical clamping plates horizontally movable towards and away from one another and vertically movable in common for laterally clamping in at least one row, with the aid of which plates each row can be grasped and subsequently lifted out of the stack.

Such an apparatus is known from U.S. Patent Specification 2,709,015. This known apparatus comprises relatively small clamping plates so that the stability in transporting simultaneously several rows leaves to be desired, whilst in addition the clamping force required for lifting several rows is exerted only on one i.e. the lowermost row, which is thus relatively heavily loaded mechanically and, moreover, the number of simultaneously transportable rows is limited. Furthermore the apparatus disclosed in the aforesaid U.S. Patent Specification comprises a swinging mechanism for moving the clamping plates towards and away from one another. This swinging mechanism is relatively complicated and has furthermore the disadvantage that due to the usually inclined position of the arms carrying the clamping plates a row clamped in may scatter about.

A further limitation of the prior art resides in that there is no possibility of utilizing a situation in which in given piles the same pattern may be found at least partly as may be desired for example, in loading roller containers. In the known technique an existing stack is completely disrupted, whilst in a further step a similar stack is built up. Needless to say that this not an efficient mode of operation.

The invention has for its object to obviate the aforesaid limitations of use and the disadvantages of the prior art and provides to this end an apparatus of the kind set forth in the preamble, in which the clamping plates have a height such that a plurality of superjacent rows can be simultaneously clamped in, that a sensing station is provided, which is directed to a stack of cages, cases or boxes to be displaced and a signal processing station arranged after the sensing station for assessing the piling pattern and for controlling the clamping plates in a manner such that the stack may be displaced in parts comprising a number of rows corresponding to said pattern, said sensing station comprising two, for example optically or ultrasonically operating sensing members disposed vertically one above the other in a position such that the lower sensing member can detect the cages, cases or boxes of a lower layer and the upper sensing member can detect the cages, cases or boxes of a layer disposed above the lower layer, whilst the signal processing station is adapted to measure the time interval between the signals representative of the relative positions of the cages, cases or boxes in the two layers produced by the two sensing members when the stack is passing by.

Great flexibility is obtained by using a microprocessor for the reception of information signals emanating from the sensing station and for the supply of control-signals for controlling the displacements and movements of the clamping plates.

Further features of the invention will be mentioned and explained with reference to the accompanying drawing. The drawing shows in:

Fig. 1 a schematic illustration of an example of a "column-piled" stack of cages;

Fig. 2 a perspective view corresponding to Fig. 1 in a processing stage in which the three foremost rows of cages are slightly lifted by the device embodying the invention;

Fig. 3 a stack of cages piled up in bonded relationship;

Fig. 4 a perspective view corresponding to Fig. 3 of a stage in which the topmost and foremost row of cages is slightly lifted by the apparatus embodying the invention;

Fig. 5 a perspective view, partly broken away, of a discharge unit having an apparatus embodying the invention;

Fig. 6 an apparatus embodying the invention forming part of the unit shown in Fig. 5; and

Fig. 7 a fork truck comprising an apparatus embodying the invention.

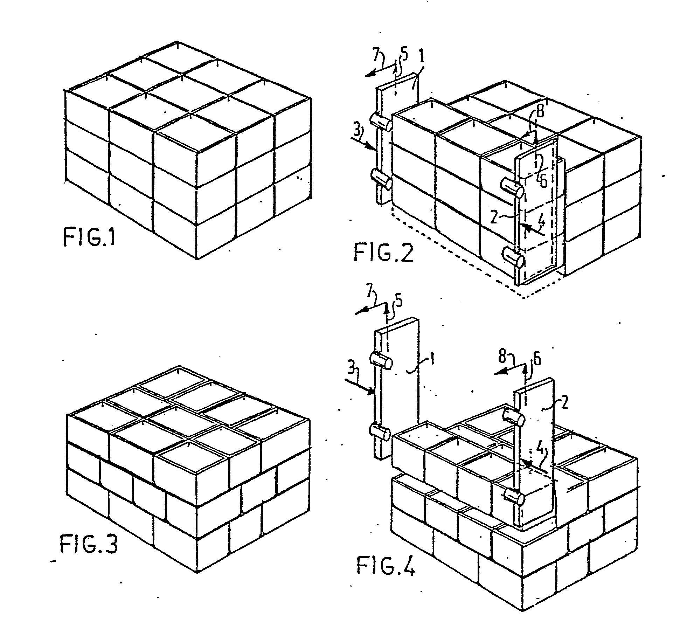

Fig. 1 is a schematic, perspective view of a column stack of $3 \times 3 \times 3$ cages, for example, intended to contain bottles. Such a stack comprises nine separate columns. It will be obvious that it is thus possible to remove the foremost part consisting of $3 \times 3 = 9$ cages as a whole from the stack without affecting the stability of the remaining pile.

Fig. 2 illustrates how with the aid of two clamping plates 1, 2 forming part of a device embodying the invention to be described hereinafter the foremost nine cages can be removed by being laterally clamped between the plates 1, 2 from the initial bond of 27 cages. The two arrows at right angles to the plates indicate symbolically the directions of the clamping force; the arrows 5, 6 and 7, 8 indicate the respective directions in which the plates 1, 2 clamped against the cages are successively displaced.

Fig. 3 shows in a similar schematic view as Fig. 1 a different kind of stack. In the example of Fig. 3 the cages are not piled up in columns, but in bonded relationship. From the prespective view of Fig. 3 it will be obvious that in this stack there are no vertically continued columns of cages not affecting one another. Contrary to the examples of Fig. 1 and 2 the bonded stack does not permit of removing the entire front part of, in this case, ten cages in a single operation.

Fig. 4 illustrates how in the case of such a stack the first i.e. the topmost and foremost row can be removed by the clamping plates 1, 2. For the sake of brevity reference is made to Fig. 2 for the meaning of the arrows of Fig. 4.

Without further explanation it will be obvious that in the stack of Figs. 1 and 2 the second layer of nine cages can be removed subsequent to the removal of the first nine cages. Thus, in three separate operational cycles the whole stack of cages can be transferred by the device embodying the invention.

Such a simple operation is not possible for the stack of Figs. 3 and 4. As stated above, the first row of cages shown in Fig. 4 is first removed and then the apparatus embodying the invention removes the second row of cages i.e. the row of cages located in the middle of the topmost layer. After the removal of the ten cages forming the topmost layer the second layer of cages is removed row by row and so on. Consequently, nine operational cycles are required for completely displacing the stack of cages piled up in bonded relationship, as shown in Figs. 3 and 4.

It should be noted that Figs. 1, 2 and 3, 4 illustrate only examples of two essentially different modes of stacking. It will be obvious, however, that between these two basically different arrays many subordinate variants are conceivable.

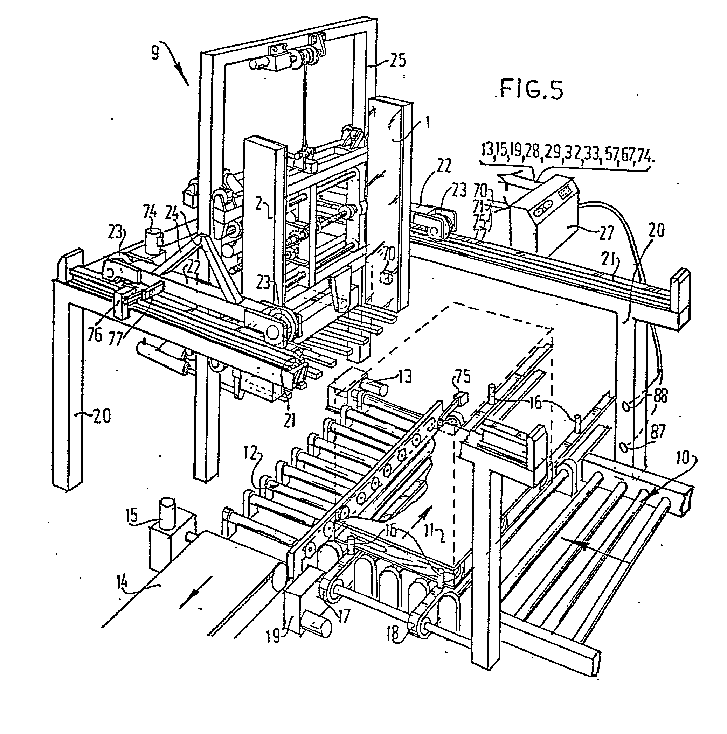

Fig. 5 shows a unit for discharging cages piled up on carrying boards and for transferring said stack of cages in separate portions to a transport mechanism of known kind.

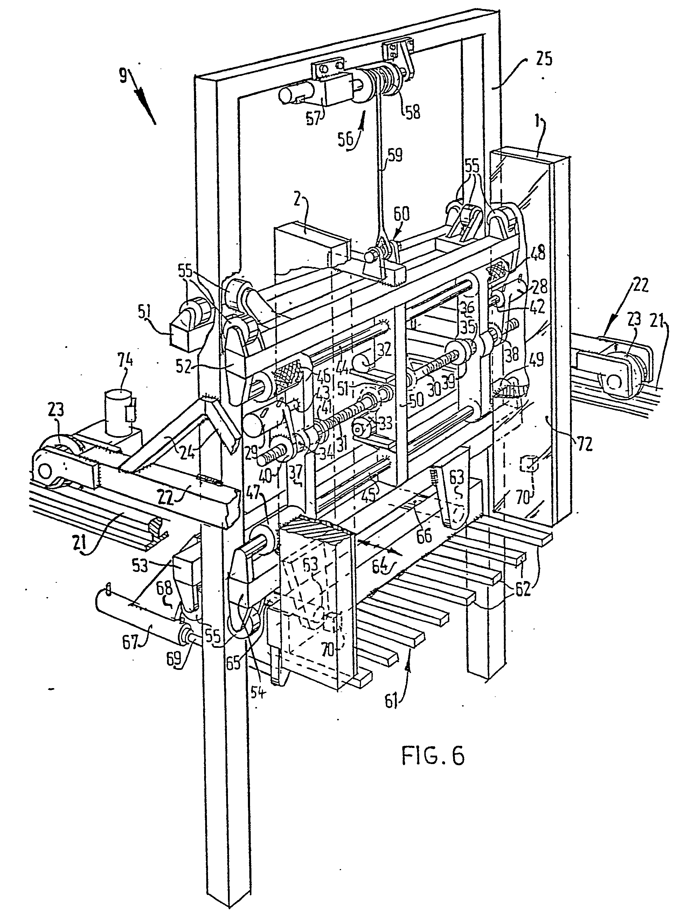

The discharging unit shown in Fig. 5 comprises an apparatus according to the invention, which is designated as a whole by reference numeral 9 and is shown in further detail in Fig. 6.

The arrangement shown in Fig. 5 comprises a roller track 10 for the supply of loaded carrying boards or pallets. The broken lines indicate a block-shaped stack of cages piled up on a carrying board 11. The cages picked up by the device 9 are transferred to a roller track 12, which can be driven by a motor/reduction unit 13. The cages picked up are transferred from the roller track 12 to a delivery conveyor belt 14, which can be driven by a motor/reduction unit 15. After completion of the unloading of the carrying board 11, this board 11 is laterally conducted away to a board stacker (not shown) by means of two conveyor belts 17, 18 provided with lugs 16, which can be driven by a motor/reduction unit 19.

The discharging transport unit shown in Fig. 5 comprises, apart from the parts described above, a double bridge 20, whose horizontal longitudinal girders support two rails 21. These rails 21 serve to guide a hood 22 having wheels 23, which hood with the support by struts 24 carries a U-shaped framework 25.

The unit of Fig. 5 comprises furthermore two vertically superjacent monitoring or sensing, i.e. a lower monitoring member 87 and an upper monitoring member 88. These sensing members are arranged in positions vertically one above the other such that the sensing member 87 can guard a lower layer of a stack and the upper sensing member 88 a layer disposed on the former. The sensing members 87 and 88 are connected to a microprocessor unit 27, which is designed to access the time interval between signals representative of the positions of the cages, cases or boxes produced by the two sensing members 87, 88 when the stack is passing by. The assessment may, for example, be performed at stiffening ribs on the sidewalls of cages or at the transitional area from one cage, case or box to the other. Referring to the first four figures, particularly to Figs. 2 and 4, it will now be obvious how the microprocessor unit 27 can control the clamping plates 1 and 2 in accordance with the assessed stack pattern. It should be noted that the first four figures are only given by way of illustration.

In the situation shown in Fig. 2 said time interval is zero or substantially zero, whereas in the state shown in Fig. 4 it has a value determined by the transport rate of the stack concerned and the dimensions of the cages.

The signals emanating from the detectors 87, 88 are employed in the microprocessor unit 27 not only to assess the stack pattern but also for assessing the position of a stack to be handled. As is shown in Figs. 2 and 4, a group of rows (column piling) or a single row (bonded piling) has to be engaged so that clamping is stable without the risk of the next-following group of rows or single row being simultaneously clamped in. In view of the foregoing the chosen clamping mode is such that the front edges of the clamping plates 1 and 2 are located between the medium plane and the rear plane of the cages to be clamped.

Fig. 6 shows in further detail the device 9 embodying the invention.

In this embodiment the clamping plates 1 and 2 are coupled for their horizontal movements towards and away from one another through two pneumatic rams 28, 29 having a comparatively small stroke with a mechanical driving member which is proportional in accordance with the desired maximum clamping range. In this embodiment said driving mechanism comprises two worm shafts 30, 31, which can be rotatably driven by two motors 32 and 33 respectively and are each provided with a nut 34 and 35 respectively displaceable only in an axial direction, the two clamping plates having a free stroke with respect to the associated nut and being coupled herewith through the associated pneumatic ram. The two nuts 34, 35 are constructed so that their outer boundary serves as the inner boundary of a sliding bearing, the outer boundary of which is formed by the circumference of an opening in the associated yoke 36, 37, which is slidable between end stop edges 38, 39 and 40, 41 respectively on the nut 34 and 35 respectively. The plungers 42, 43 of the pneumatic rams 28 and 29 respectively are rigidly coupled with the yokes 36 and 37 respectively. The yokes 36, 37 are guarded against rotation and are guided by guide rods 44, 45 through sliding bearings 46, 47, 48, and 49.

The rods 44, 45 are rigidly connected with a frame plate 50. This frame plate 50 serves in addition for rotatably supporting the worm shaft 31 by means of a thrust bearing 51 and for supporting the worm shaft 30 by means of a thrust bearing not shown.

With the vertical frame plate 50 are connected four horizontal frame beams 51, 52, 53, 54. These frame beams 51, 52, 53, 54 have at both ends a plurality of guide wheels generally designated by reference numeral 55 and enabling a vertical displacement of the frame beams 51 to 54 across the U-shaped framework 25, the clamping plates 1, 2 being connected with said wheels.

The vertical displacement of the frame beams 51 to 54 and of the parts coupled herewith is performed by the action of a winch 56 fastened to the short, horizontal end of the U-shaped framework 25 and comprising a motor/reduction unit 57 and a winding pulley 58 winding up or off a cable 59 under the action of gravity in accordance with the energization of the unit 57, said cable being coupled with the frame beams 51, 52 by means of an ear-shaft unit 60.

The apparatus shown in Fig. 6 comprises furthermore a displaceable bottom 61, which is formed by a plurality of relatively spaced, parallel bars 62 and which can be displaced in horizontal position below the space between the clamps 1 and 2 after the clamping plates 1, 2 have grasped and sufficiently lifted a row or a stack of rows of cages, cases or boxes.

The bottom 61 is connected with a frame 64, which is slidable along guide rods 65, 66. These guide rods 65, 66 are rigidly coupled by ears 63 with the lower frame beams 53, 54. The displacement of the frame 64 and hence of the displaceable bottom 61 is performed by means of an appropriate driving member. Fig. 6 shows one driving member i.e. a hydraulic ram 67. The housing of this hydraulic ram is connected by means of a fastening plate 68 with the frame beam 53. The plunger 69 of the ram is coupled with the frame 64. The ram 67 is of the double acting type, which means that it is capable of producing a push and a pull.

In anticipation of the description of the operation of the device embodying the invention it is noted with respect to the distances between the rods 62 that these distances as well as the disposition of the unit as a whole are chosen in accordance with the distances between the rollers of the roller track 12. The disposition of the rods 62 is such that they can be received in the free space between the rollers 12.

The apparatus concerned also comprises means for stopping the drive of the clamping plates 1, 2 by the motors 32, 33 in the clamping direction and the subsequent energization of the pneumatic rams 28 and 29 respectively after the distance between the plates or a magnitude dependent thereon, for example, the measured pressing force has reached a predetermined value.

In the present embodiment each of the clamping plates 1, 2 has a force sensing member 70 and 71 respectively, one end of which bears on the clamping plate 1, 2 respectively and the other end of which bears on a cover plate 72 and 73 respectively, which is slightly resilient with respect to the associated plate. In the present embodiment of the unit with the device according to the invention the microprocessor unit 27 operating as a central control-unit serves to control the motor/reduction unit 13, 15, 19, the pneumatic rams 28, 29, the motors 32, 33, the motor/reduction unit 57, the hydraulic ram 67 and the motor/reduction unit 74. For this control the microprocessor unit 27 is coupled with the sensing members 87, 88 for assessing the piling pattern on the basis of the signals produced when the stack of cages is passing by.

In this connection reference is made to the explanation given above for Figs. 1, 2 and 3, 4 in which the number of rows to be removed is based on the assessed mode of piling up.

Now follows a brief description of the operation of the device shown in Figs. 5 and 6 on the basis of the type of stack shown in Figs. 1 and 2.

When the loading board 11 is supplied on the roller track 10 the presence of the loading board 11 at the required place of operation is detected by a switch 75 actuated by the loading board 11.

At this instant the microprocessor 27 assesses the piling pattern concerned of the crates stacked on the loading board 11 by means of the signals supplied by the sensing members 87 and 88.

Upon the actuation of the switch 75 the microprocessor 27 passes a command to the motor/reduction unit 74 so that the hood 22 travels to a position in which the clamping plates 1, 2 can pick up the first row or group of rows of cages.

After the time required thereto has elapsed, the motors 32, 33 are energized from the microprocessor 27 after which at the transgression of a given clamping force as stated by the signals applied by the sensing member 70, 71 to the microprocessor 27 a given clamping effort is obtained. At this instant the pneumatic rams 28, 29 are energized by a command from the unit 27. From this instant onwards the clamping effect is ensured.

Immediately thereafter the microprocessor unit 27 passes a command to the motor/reduction unit 67, which then performs an upward displacement of the clamps 1, 2 over a distance of about 5 cms. After the time required thereto has elapsed, the microprocessor energizes the hydraulic ram 67, as a result of which the displaceable bottom 61 shifts forward as far as below the bottom of the lowermost cages.

Subsequently the unit 27 instructs the hood to travel back to a position such that the cages to be transported are moved to above the rollers 12. In order to assess the place where the desired position is reached the approximation switch 76 is used, which cooperates with the lug 77 on the hood 22.

As soon as by the actuation of the switch 76 the microprocessor 27 again energizes the motors 32, 33 and the pneumatic rams 28, 29 in a direction opposite to that in the beginning of the clamping effort so that the clamping plates 1, 2 return to their initial positions. At the same time by a corresponding energization of the hydraulic ram 67 the rods 62 are displaced towards their home position.

By the directly subsequent energization of the motor/reduction unit 13 and the energization of the motor/reduction unit 15 the cages are conducted away on the conveyor belt 14.

The next layer of cages is removed in an analogous manner from the loading board 11, it being noted that by the control of the microprocessor 27 the motor/reduction unit 74 remains energized slightly longer so that the clamping plates 1, 2 arrive at the correct position for clamping in the second layer of cages. Apart from this modification the cycle of operation is identical to that for the removal of the first layer of cages.

After the foregoing it will be obvious how the last layer of cages will be removed from the loading board 11.

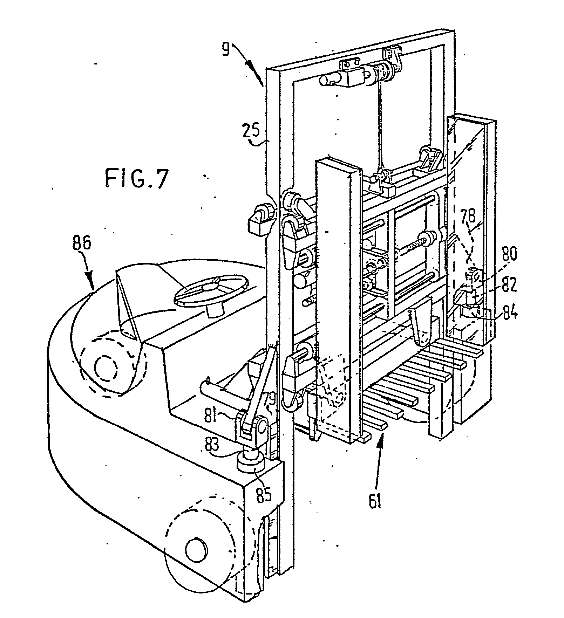

Fig. 7 shows a variant in which the U-shaped framework 25 is connected through fastening plates 78, 79 and ears cooperating herewith with the plungers 82, 83 of two hydraulic rams 84, 85 the housings of which are fastened to a lift truck 86.

This construction provides a high degree of mobility; the truck can pass through relatively low doors and is nevertheless capable of displacing a relatively high stack.

From this variant it will be apparent why the use of the displaceable bottom 61 may be useful. During travel jolts may occur, which may cause rupture of a cage resulting in partial loss of the clamping effort transferred by the walls and bottoms. The bottom 61 then serves as a capturing member.

In the embodiment shown in Figs. 5 and 6 the bottom may also be useful, since if one of the cages is fractured the clamping force may get lost and the cages may fall down from between the clamps. This is not only undesirable for technical reasons, but it may bring about danger to the staff working in the vicinity.

## Claims

1. An apparatus (9) for displacing in parts a stack of cages, cases or boxes disposed in said stack in a plurality of horizontal rows extending above one another and side by side, said device comprising a displaceable framework having two vertical clamping plates (1, 2) horizontally movable towards and away from one another for laterally clamping between them at least one row and vertically displaceable in common, with the aid of which plates each row can be grasped and, for example, lifted out of the stack, characterized in that the clamping plates (1, 2) have a height such that a plurality of superjacent rows can be simultaneously clamped in, that a sensing station is provided, which is directed to a stack of cages, cases or boxes to be displaced and a signal processing station arranged after the sensing station for assessing the piling pattern and for controlling the clamping plates in a manner such that the stack may be displaced in parts comprising a number of rows corresponding to said pattern, said sensing station comprising two sensing members (87, 88) disposed vertically one above the other in a position such that the lower sensing member (87) can detect the cages, cases or boxes of a lower layer and the upper sensing member (88) can detect the cages, cases or boxes of a layer disposed above the lower layer, whilst the signal processing station is adapted to measure the time interval between the signals representative of the relative positions of the cages, cases or boxes in the two layers produced by the two sensing members when the stack is passing by.

2. The apparatus as claimed in claim 1, characterized by a microprocessor (27) for the reception of information signals emanating from the sensing station and for the supply of control-signals for controlling the displacements and movements of the clamping plates.

## Patentansprüche

1. Ein Gerät (9) zum Versetzen von Teilen eines Stapels von Lattenkisten, Kästen oder Dosen, die in dem Stapel in einer Vielzahl horizontaler Reihen angeordnet sind, die sich übereinander und Seite an Seite erstrecken, wobei die Vorrichtung ein verschiebbares Rahmengestell mit zwei vertikalen Klemmplatten (1, 2) aufweist, die in Horizontalrichtung in Richtung aufeinander zu und voneinander fort bewegbar sind, um zwischen sich zumindest eine Reige seitlich einzuklemmen, und die gemeinsam miteinander in Vertikalrichtung bewegbar sind, so daß mit Hilfe dieser Klemmplatten jede Reihe erfaßt und beispielsweise aus dem Stapel herausgehoben werden kann, dadurch gekennzeichnet, daß die Klemmplatten (1, 2) eine derartige Höhe aufweisen, daß mehrere übereinander angeordnete Reihen gleichzeitig eingeklemmt werden können, daß eine Meßstation vorgesehen ist, die auf einen Stapel von zu versetzenden Lattenkisten, Kästen oder Dosen gerichtet ist, daß eine Signalverarbeitungsstation nach der Meßstation angeordnet ist, um das Stapelmuster zu ermitteln und um die Klemmplatten in einer derartigen Weise zu steuern, daß der Stapel in Teilen versetzt werden kann, die eine Anzahl von Reihen umfassen, die dem Stapelmuster entsprechen, daß die Meßstation zwei Meßelements (87, 88) aufweist, die in Vertikalrichtung übereinander in einer derartigen Position angeordnet sind, daß das untere Meßelement (87) die Lattenkisten, Kästen oder Dosen einer unteren Schicht feststellen kann und das obere Meßelement (88) die Lattenkisten, Kästen oder Dosen einer über der unteren Schicht angeordneten Schicht feststellen kann, während die Signalverarbeitungsstation zur Messung des Zeitintervalls zwischen den die Relativpositionen der Lattenkisten, Kästen oder Dosen in den beiden Schichten darstellenden Signalen ausgebildet ist, die von den beiden Meßelementen erzeugt werden, wenn der Stapel vorbeiläuft.

2. Gerät nach Anspruch 1, gekennzeichnet durch einen Mikroprozessor (27) zum Empfang der von der Meßstation ausgehenden Informationssignale und zur Zuführung von Steursignalen zur Steuerung der Verstellungen und Bewegungen der Klemmplatten.

## Revendications

1. Dispositif (9) pour déplacer des parties d'un empilement de cages, de caisers ou de boîtes disposés dans cet empilement en une série de rangées horizontales s'étendant l'une au-dessus de l'autre et côte à côte, ce dispositif comprenant une armature mobile comprenant deux plaques (1, 2) de serrage vertical déplaçables horizontalement l'une vers l'autre et inversement pour serrer latéralement entre elles au moins une rangée, et étant déplaçables ensemble verticalement, chaque rangée pouvant être saisie à l'aide de ces plaques et par exemple enlevée à l'extérieur de l'empilement, caractérisé en ce que les plaques de serrage (1, 2) ont une hauteur telle qu'elles puissent serrer simultanément entre elles une série de rangées superposées, et en ce qu'il comprend un poste de détection dirigé vers un empilement de cages, de casiers ou de boîtes à déplacer, et un poste de traitement de signaux disposé après le poste de détection pour traiter l'empilement considéré et pour commander les plaques de serrage de façon que l'empilement puisse être déplacé en parties comprenant un nombre de rangées correspondant à cet empilement, le poste de détection comprenant deux élément détecteurs (87, 88) diposés verticalement l'un au-dessus de l'autre dans une position telle que l'élément détecteur inférieur (87) puisse détecter les cages, casiers ou boîtes d'une couche inférieure et que l'élément détecteur supérieur (88) puisse détecter les cages, casiers ou boîtes d'une couche disposée au-dessus de la couche inférieure, tandis que le poste de traitement des signaux est adapté pour mesurer l'intervalle de temps entre les signaux représentatifs des positions relatives des cages, casiers ou boîtes dans les deux couches produites par les deux éléments détecteurs lorsque l'empalement effectue un passage devant le dispositif.

2. Dispositif selon la revendication 1, caractérisé en ce qu'il comprend un microprocesseur (27) pour la réception des signaux d'information issus du poste de détection et pour l'émission de signaux de commande pour commander les déplacements des plaques de serrage.

FIG.1

FIG.2

FIG.3

FIG.4

# FIG.5

13,15,19,28,29,32,33,57,67,74.

0 045 553

FIG. 6

3

FIG.7